# EUROPÄISCHE PATENTSCHRIFT

(11) **EP 0 962 018 B1**
(45) Veröffentlichungstag und Bekanntmachung des Hinweises auf die Patenterteilung: **10.08.2005**
(21) Anmeldenummer: 98905242.8
(22) Anmeldetag: 12.01.1998
(51) Int. Cl.: G11B 27/00, G11B 17/22, G11B 19/02, G11B 31/00

(54) **ABSPIELGERÄT**
PLAYBACK UNIT
APPAREIL DE REPRODUCTION

(30) Priorität: 15.01.1997 DE 19701057
(43) Veröffentlichungstag der Anmeldung: 08.12.1999
(73) Patentinhaber: ROBERT BOSCH GMBH, 70442 Stuttgart (DE)
(72) Erfinder: LANDSVOGT, Torsten, D-31137 Hildesheim (DE)
(86) Internationale Anmeldenummer: PCT/DE1998/000086
(87) Internationale Veröffentlichungsnummer: WO 1998/032131

(56) Entgegenhaltungen:
- EP-A- 0 680 040
- DE-A- 3 733 251
- US-A- 5 051 973
- US-A- 5 408 448
- PATENT ABSTRACTS OF JAPAN vol. 096, no. 012, 26.Dezember 1996 & JP 08 221874 A (CLARION CO LTD), 30.August 1996,
- PATENT ABSTRACTS OF JAPAN vol. 095, no. 4, 31.Mai 1995 & JP 07 014365 A (KENWOOD CORP.), 17.Januar 1995,
- PATENT ABSTRACTS OF JAPAN vol. 014, no. 258 (P-1055), 4.Juni 1990 & JP 02 068790 A (MATSUSHITA ELECTRIC IND. CO., LTD.), 8.März 1990,

## Beschreibung

### Stand der Technik

Die Erfindung geht von einem Abspielgerät nach der Gattung des Hauptanspruchs aus.

Aus der Gebrauchsanweisung "Compact Disc Player CDP-C745, CDP-C545" von 1994 der Firma Sony ist ein Compact-Disc-Wechsler bekannt, bei dem zwei Möglichkeiten für die zufällige Auswahl von Titeln der im Compact-Disc-Wechsler abgelegten Compact-Discs realisiert sind. Zum einen ist dabei eine Funktion vorhanden, die die zufällige Auswahl der Titel einer einzigen Compact-Disc ermöglicht. Zum anderen ist bei diesem Compact-Disc-Wechsler eine Funktion realisiert, die die zufällige Auswahl von Titeln aller im Compact-Disc-Wechsler abgelegter Compact-Discs ermöglicht.

### Vorteile der Erfindung

Das erfindungsgemäße Abspielgerät mit den Merkmalen des Hauptanspruchs hat demgegenüber den Vorteil, daß über die Vorgabe der Wahrscheinlichkeit zur Auswahl der einer vom Abspielgerät wiedergegebenen Datengruppe nachfolgenden wiederzugebenden Datengruppe auf demselben Aufzeichnungsträger ein Kriterium vorhanden ist, mit dem beliebig zwischen dem Extremfall der zufälligen Auswahl von Titeln auf nur einem Aufzeichnungsträger und der zufälligen Auswahl von Titeln auf abwechselnd unterschiedlichen Aufzeichnungsträgern ein Zwischenzustand eingestellt werden kann. Auf diese Weise wird eine äußerst flexible Zufallsfunktion zur Auswahl der Datengruppen von im Abspielgerät abgelegten Aufzeichnungsträgern realisiert. Durch geeignete Vorgabe der Wahrscheinlichkeit kann außerdem eine starke mechanische Beanspruchung des Abspielgerätes durch häufiges Wechseln der Aufzeichnungsträger und lange Pausen zwischen den einzelnen Datengruppen durch die Wechselzeiten vermieden oder zumindest reduziert werden.

Durch die im Unteranspruch aufgeführte Maßnahme ist eine vorteilhafte Weiterbildung und Verbesserung des im Hauptanspruch angegebenen Abspielgerätes möglich.

Besonders vorteilhaft ist dabei, daß die Eingabeeinheit ein Einstellelement umfaßt, dessen Einstellung die Wahrscheinlichkeit zur Auswahl der nachfolgend wiederzugebenden Datengruppe auf demselben Aufzeichnungsträger vorgibt. Auf diese Weise kann der Benutzer selbst diese Wahrscheinlichkeit vorgeben, so daß die erhöhte Funktionalität des Abspielgerätes vom Benutzer auch beeinflußbar und die genannte Wahrscheinlichkeit nach seinen Bedürfnissen einstellbar ist.

### Zeichnung

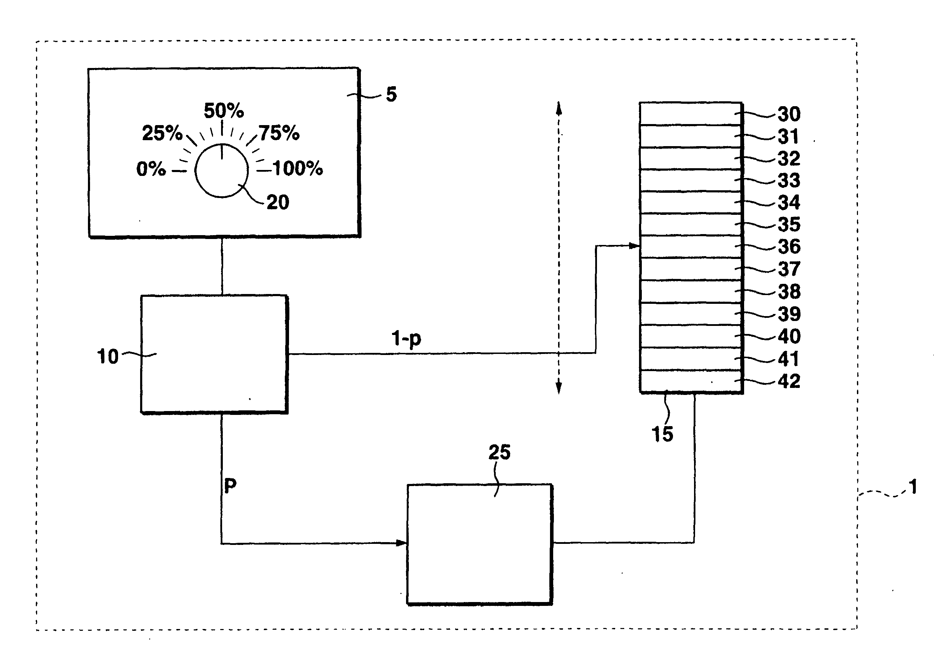

Ein Ausführungsbeispiel der Erfindung ist in der Zeichnung dargestellt und in der nachfolgenden Beschreibung näher erläutert. Es zeigt die einzige Figur ein Blockschaltbild eines erfindungsgemäßen Abspielgerätes.

### Beschreibung des Ausführungsbeispiels

In der Figur kennzeichnet 1 ein als Compact-Disc-Wechsler ausgebildetes Abspielgerät, das eine Eingabeeinheit 5 mit einem als Drehregler ausgebildeten Einstellelement 20 umfaßt. Der Compact-Disc-Wechsler 1 umfaßt weiterhin ein Magazin 15 mit dreizehn Ablageplätzen 30,...,42 zur Ablage von als Compact-Discs ausgebildeten Aufzeichnungsträgern, ein Laufwerk 25 zum Abspielen einer aus dem Magazin 15 ladbaren Compact-Disc und einen Zufallsgenerator 10 zur zufallsbedingten Auswahl von auf in das Laufwerk 25 aus dem Magazin 15 ladbaren Compact-Discs. Dazu ist die Eingabeeinheit 5 mit dem Zufallsgenerator 10 verbunden, an den sowohl das Laufwerk 25 als auch das Magazin 15 angeschlossen ist. Weiterhin ist das Laufwerk 25 mit dem Magazin 15 verbunden.

Am Drehregler 20 der Eingabeeinheit 5 kann vom Benutzer stufenlos eine Wahrscheinlichkeit P zwischen 0 und 100 % eingestellt werden, wobei beispielsweise einige Positionen des Drehreglers durch die zugehörige Prozentangabe, wie "0%", "25%", "50%", "75%" und "100%" gekennzeichnet sind. In der dargestellten Figur ist der Drehregler 20 auf eine Wahrscheinlichkeit P von 50 % eingestellt. Das bedeutet, daß eine vom Zufallsgenerator 10 ausgewählte Datengruppe, beispielsweise ein Musiktitel, der im Anschluß an eine vom Compact-Disc-Wechsler 1 wiedergegebene Datengruppe einer in das Laufwerk 25 des Compact-Disc-Wechslers 1 eingelegten Compact-Disc wiedergegeben werden soll, mit der Wahrscheinlichkeit P = 50 % auf dem im Laufwerk 25 befindlichen selben Aufzeichnungsträger gespeichert ist. Mit der Wahrscheinlichkeit 1-P, die im gewählten Anwendungsfall ebenfalls 50 % beträgt, wird der Zufallsgenerator 10 jedoch für die Wiedergabe im Anschluß an die vom Compact-Disc-Wechsler gerade wiedergegebene Datengruppe der in das Laufwerk 25 des Compact-Disc-Wechslers 1 eingelegten Compact-Disc eine Datengruppe auswählen, die auf einer in einem der Ablageplätze 30,...,42 abgelegten Compact-Disc gespeichert ist. Dabei kann der zufallsgenerator 10 auf jede im Magazin 15 abgelegte Compact-Disc zugreifen, was durch den gestrichelten Doppelpfeil in der Figur dargestellt ist. Dabei greift im dargestellten Ausführungsbeispiel der Zufallsgenerator 10 mit der Wahrscheinlichkeit 1-P gerade auf eine Datengruppe einer im siebten Ablageplatz 36 abgelegten Compact-Disc für die der aktuellen Wiedergabe nachfolgende Wiedergabe zu.

Bei einer Einstellung des Drehreglers 20 auf 0 wird die nachfolgend wiederzugebende Datengruppe mit einer Wahrscheinlichkeit von P = 100 % auf einer im Magazin 15 abgelegten Compact-Disc gespeichert sein.

Bei Einstellung des Drehreglers 20 auf 100 % wird die nachfolgend wiederzugebende Datengruppe auf der gerade im Laufwerk 25 zur Wiedergabe abgelegten Compact-Disc gespeichert sein.

Wird vom Zufallsgenerator 10 für eine nachfolgend wiederzugebende Datengruppe eine Compact-Disc aus dem Magazin 15 benötigt, so wird nach Beendigung der gerade wiedergegebenen Datengruppe die im Laufwerk 25 zur Wiedergabe abgelegte Compact-Disc durch die im Magazin 15 für die nachfolgend wiederzugebende Datengruppe ausgewählte Compact-Disc in einer dem Fachmann bekannter Weise ausgewechselt.

In einem weiteren Ausführungsbeispiel kann das Magazin 15 auch außerhalb des Abspielgerätes 1 angeordnet sein. Weiterhin kann es sich beim Abspielgerät 1 um einen mit einem Autoradio verbundenen oder in ein Autoradio integrierten Compact-Disc-Wechsler handeln. Das Einstellelement 20 kann dann als Bedienelement an der Bedienfront des Autoradios ausgebildet sein.

## Patentansprüche

1. Abspielgerät (1), insbesondere Compact-Disc-Wechsler, mit einer Eingabeeinheit (5) und einem Zufallsgenerator (10) zur zufallsbedingten Auswahl von auf in das Abspielgerät (1) aus einem Magazin (15) ladbaren Aufzeichnungsträgern, insbesondere Compact-Discs, gespeicherten Datengruppen, **dadurch gekennzeichnet, daß** die Wahrscheinlichkeit vorgebbar ist, mit der eine vom Zufallsgenerator (10) ausgewählte Datengruppe, die im Anschluß an eine vom Abspielgerät (1) wiedergegebene Datengruppe eines in das Laufwerk (25) des Abspielgerätes (1) eingelegten Aufzeichnungsträgers wiedergegeben werden soll, auf demselben Aufzeichnungsträger gespeichert ist.

2. Abspielgerät (1) nach Anspruch 1, **dadurch gekennzeichnet, daß** die Eingabeeinheit (5) ein Einstellelement (20) umfaßt, dessen Einstellung die Wahrscheinlichkeit zur Auswahl der nachfolgend wiederzugebenden Datengruppe auf demselben Aufzeichnungsträger vorgibt.

## Claims

1. Player (1), particularly a compact disc changer, having an input unit (5) and a random number generator (10) for randomly selecting data groups stored on recording media, particularly compact discs, which can be loaded into the player (1) from a magazine (15), **characterized in that** it is possible to prescribe the probability of a data group selected by the random number generator (10) which is intended to be reproduced after a data group reproduced by the player (1) from a recording medium inserted into the drive (25) of the player (1) being stored on the same recording medium.

2. Player (1) according to Claim 1, **characterized in that** the input unit (5) comprises an adjusting element (20) whose setting prescribes the probability of selection of the next data group which is to be reproduced on the same recording medium.

## Revendications

1. Appareil de restitution (1), notamment échangeur de disques compacts, comprenant une unité d'entrée (5) et un générateur aléatoire (10) pour la sélection aléatoire de groupes de données mémorisés sur des supports d'enregistrement, en particulier des disques compacts, pouvant être chargés dans l'appareil de restitution (1) à partir d'un magasin (15),
**caractérisé en ce qu'**
on peut prédéfinir la probabilité selon laquelle un groupe de données sélectionné par le générateur aléatoire (10) et qui doit être reproduit à la suite d'un groupe de données que reproduit l'appareil de restitution (1) et qui est déposé sur un support d'enregistrement introduit dans le mécanisme d'entraînement (25) de l'appareil de restitution (1), est mémorisé sur le même support d'enregistrement.

2. Appareil de restitution (1) selon la revendication 1,
**caractérisé en ce que**
l'unité d'entrée (5) comprend un élément de réglage (20) dont le réglage prédéfinit la probabilité que le groupe de données à reproduire ensuite soit sélectionné sur le même support d'enregistrement.
